## Europäisches Patentamt
## European Patent Office
## Office européen des brevets

(11) Veröffentlichungsnummer: **0 149 695**
**A1**

# (12) EUROPÄISCHE PATENTANMELDUNG

(21) Anmeldenummer: **84100628.1**

(22) Anmeldetag: **21.01.84**

(51) Int. Cl.⁴: **F 16 K 15/14**
**B 65 D 75/52**

(43) Veröffentlichungstag der Anmeldung:
**31.07.85 Patentblatt 85/31**

(84) Benannte Vertragsstaaten:
**AT BE CH DE FR GB IT LI NL SE**

(71) Anmelder: **Beiersdorf Aktiengesellschaft**
**Unnastrasse 48**
**D-2000 Hamburg 20(DE)**

(72) Erfinder: **Giese, Erland**
**Dickichtweg 8**
**D-2000 Hamburg 67(DE)**

(72) Erfinder: **Knolle, Herbert, Dipl.-Chem. Dr.**
**Schaumannskamp 212**
**D-2057 Reinbek(DE)**

(72) Erfinder: **Gärtner, Wolfgang**
**Auf dem Felde 21**
**D-2081 Alveslohe(DE)**

(54) Überdruckventil für Verpackungsbehälter.

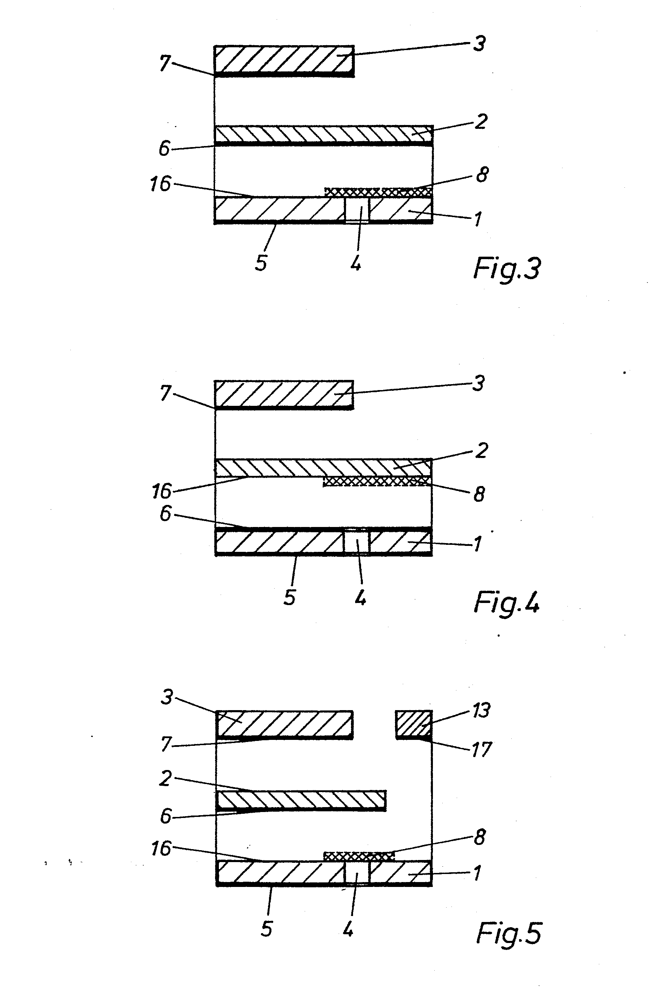

(57) Überdruckventil für einen Verpackungsbehälter, mit einem an der Außenwandung des Behälters anklebbaren Basisteil mit Ventilloch, einer Membrane, die den Basisteil bedeckt und auf ihm abhebbar aufliegt, und - falls wegen der Verpackungsform oder zwecks Regulierung des Ansprechdrucks erforderlich - mit mindestens einem an der Membrane und/oder an dem Basisteil befestigten Distanzhalter. Die Membrane (2) ist in der Art einer Zunge zwischen dem oder dem einen Distanzhalter (3) und dem Basisteil (1) bewegbar eingespannt, wobei Distanzhalter (3) und Basisteil (1) einen Schnabel bilden. Im Bereich des Ventillochs (4) ist zwischen Distanzhalter (3) und Basisteil (1) ein Haftwirkungsbereich (8) vorgesehen, der die Bewegung der Membrane (2) erst zuläßt, wenn ein bestimmter Druck im Ventilloch (4) ansteht. Für die Haftwirkungsschicht kommen bestimmte Releasematerialien in Frage, oder aber es werden Materialien für Distanzhalter (3), Basisteil (1) und Membrane (2) eingesetzt, die permanente intermolekulare Kräfte nach außen abgeben können. Ein Fluid zwischen Membrane (2) und Basisteil (1) ist nicht erforderlich (Fig. 3).

Fig.1

Croydon Printing Company Ltd.

BEIERSDORF AKTIENGESELLSCHAFT
HAMBURG


Überdruckventil für Verpackungsbehälter


Die Erfindung betrifft ein Überdruckventil für einen Verpackungsbehälter mit einem an der Außenwandung des Behälters anklebbaren Basisteil mit Ventilloch, einer Membrane, die den Basisteil bedeckt und auf ihm abhebbar aufliegt und - falls wegen der Verpackungsform oder zwecks Regulierung des Ansprechdrucks erforderlich - mindestens einem an der Membrane und/oder an dem Basisteil befestigten Distanzhalter.

Mit Hilfe eines derartigen, bekannten Überdruckventils (DE-OS 28 48 834) soll erreicht werden, daß ein Verpackungsbehälter nicht durch einen im Innenraum des abgeschlossenen Behälters entstehenden Druck aufgebläht oder gar zerstört werden kann. Tritt nämlich im Innerraum eines Verpackungsbehälters ein unzulässig hoher Druck durch Gasentwicklung auf, so soll dieses Gas in den Außenraum entweichen können. Da andererseits keine Gase von außen her in den Verpackungsbehälter eindringen sollen, werden Rückschlagventile eingesetzt, die bei Erreichen eines bestimmten Innendrucks öffnen, den Zutritt von Gas oder Luft von außer her jedoch ausschließen. Die bei dem bekannten Ventil vorgesehenen Distanzhalter haben die Funktion, zu verhindern, daß mehrere nebeneinander lagernde Verpackungsbehälter irgendeinen mechanischen Einfluß auf das Überdruckventil ausüben können. Würde kein Distanzhalter vorgesehen sein, so könnte das Überdruckventil daran gehindert werden, sich zu öffnen, weil ein benachbarter Verpackungsbehälter die Membrane auf das Ventilloch drückt.

Bekannte Überdruckventile haben jedoch eine Reihe von Nachteilen, zum einen, daß eine verhältnismäßig komplizierte Fertigung aus vielen Einzelteilen erforderlich ist, damit das hergestellte Ventil hinsichtlich des Ansprechens auf einen Überdruck und hinsichtlich der Dichtigkeit gegenüber dem Außendruck ausreichend betriebssicher ist. Zum anderen zeigen bekannte Ventile keine zufriedenstellenden Ansprechdruckcharakteristiken. Auch ist es bei bekannten Überdruckventilen erforderlich, zwischen Membrane und Basisteil ein Fluid anzubringen, welches für eine gute Auflage der Membrane auf dem Distanzstück sorgen soll.

Durch die vorliegende Erfindung sollen nun die Nachteile bekannter Überdruckventile der eingangs genannten Art beseitigt werden, insbesondere soll die Verwendung eines Fluids entfallen.

Erreicht wird dies durch ein Überdruckventil gemäß den Ansprüchen.

Bei einer Ausführungsform eines Überdruckventils gemäß der Erfindung wird aus dem Basisteil und dem Distanzhalter eine Art Schnabel gebildet, und zwischen diesen Teilen des Schnabels befindet sich die von dem Basisteil abhebbare Membrane, welche in der Art einer Zunge wirkt. Durch diese Konstruktion erhält der Distanzteil eine zusätzliche Funktion; er dient nämlich neben seiner eigentlichen Funktion auch als eine Art Einspannteil für die Membrane und nimmt dabei Einfluß auf die Ansprechdruckcharakteristik, weil je nach Wahl der Abmessungen und der Lage des Distanzhalters in Bezug auf das Ventilloch die gewünschte Ansprechdruckcharakteristik eingestellt werden kann.

Damit das Überdruckventil voll funktionsfähig ist, muß die Membrane an dem Basisteil nach Erreichen eines bestimmten Drucks im Ventilloch abhebbar befestigt sein. Hierzu ist zwischen den nicht verklebten Teilen der Membrane und des Basisteils eine Haftwirkungsschicht vorgesehen, die sich im Bereich des Ventillochs am Basisteil oder an der Membrane befindet. Diese Haftwirkungsschicht bewirkt eine lösbare Verbindung von Membrane und Basisteil miteinander, jedoch keine feste Verklebung dieser Teile. In Frage kommen für diesen Zweck Releasemittel aber auch Folien, an deren Oberflächen sich Kraftwirkungen entfalten können, wenn sie sich berühren, z.B. ferrodielektrische Folien und dergleichen.

Die Erfindung wird nachstehend an Hand der Zeichnung beispielsweise erläutert.

Fig. 1 zeigt eine Querschnittsansicht einer Ausführungsform eines Überdruckventils gemäß der Erfindung.

Fig. 2 zeigt eine Draufsicht auf das in Fig. 1 gezeigte Überdruckventil.

Fig. 3 bis 6 zeigen Seitenschnittansichten der räumlich voneinander getrennten Elemente von unterschiedlichen Ausführungsformen von Überdruckventilen gemäß der Erfindung.

Fig. 7 zeigt eine Einzelheit des in Fig. 5 gezeigten Überdruckventils im Schnitt.

Bei dem Überdruckventil gemäß der Erfindung handelt es sich vorzugsweise um ein aus mehreren Folien gebildetes flach-zylinderförmiges Ventil, selbstverständlich kann das Ventil in anderer Gestalt, z.B. in Quaderform, hergestellt werden.

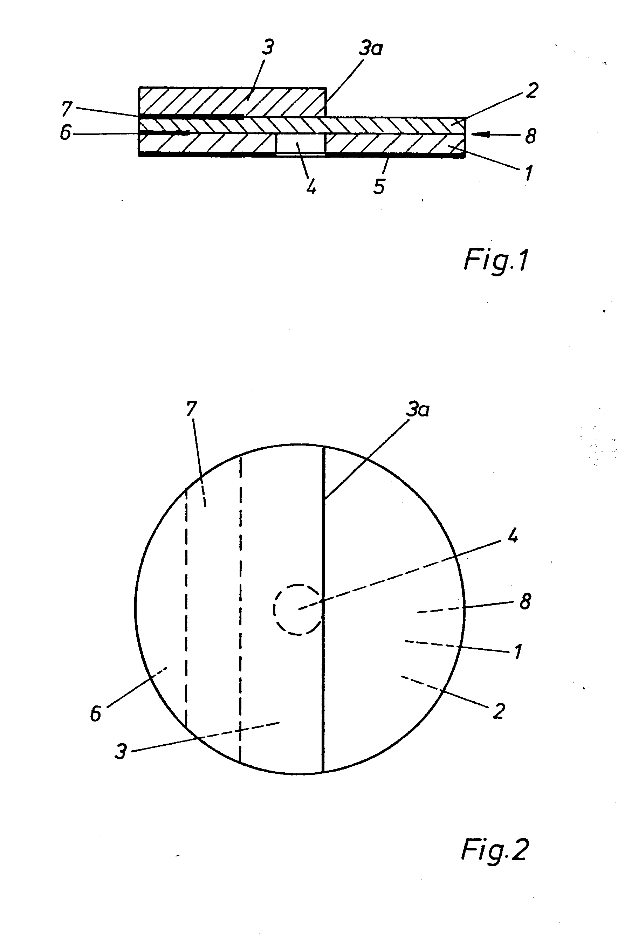

In Fig. 1 ist mit 1 der Basisteil bezeichnet worden, welcher in der Mitte das Ventilloch 4 aufweist. Dieses Ventilloch 4 hat eine ausreichende Größe, so daß das fertiggestellte Ventil später leicht und sicher so auf einen Verpackungsbehälter aufgebracht werden kann, daß eine an diesem hergestellte Öffnung sich im Bereich des Ventillochs 4 befindet. Der Basisteil 1 ist an seiner unteren Fläche mit einer Klebstoffschicht 5 versehen.

Oberhalb des Basisteils 1 ist die Membrane 2 angeordnet, welche lediglich im Bereich der Fläche 6 mit dem Basisteil 2 verklebt ist. Der verbleibende, mit 8 bezeichnete Bereich ist mit einem Releasemittel versehen, so daß die Membrane 2 an dem Basisteil 1 haftet, allerdings unter bestimmten Bedingungen, nämlich wenn unter dem Ventilloch 4 ein ausreichend hoher Druck entsteht, die Haftung zwischen dem Basisteil 1 und der Membrane 2 aufgehoben wird.

Auf ihrer oberen Fläche ist die Membrane 2 mit einer Klebstoffschicht 7 mit dem Distanzstück 3 verbunden. In der Fig. 1 ist die Klebstoffschicht 7 größer als die Klebstoffschicht 6 wiedergegeben, was jedoch nicht zwingend notwendig ist. Wesentlich ist jedoch, daß ein Distanzhalter 3 nicht auf seiner gesamten unteren Fläche mit der Membrane 2 verklebt sein muß. Der Distanzhalter 3 hat im Gegensatz zur Membrane 2 und dem Basisteil 1 keine Vollkreisfläche als Querschnitt. Vielmehr ist der Distanzhalter 3 durch eine Rechteckstirnfläche 3a an seiner einen Seite begrenzt.

Die Herstellung des Überdruckventils erfolgt in der vorangehend geschilderten Reihenfolge, indem nämlich zuerst die Klebeverbindung zwischen dem Basisteil 1 und der Membrane 2 und sodann zwischen der Membrane 2 und dem Distanzhalter 3 hergestellt wird.

Wird das Überdruckventil gemäß der Erfindung auf einen Verpackungsbehälter, beispielsweise auf eine versiegelte Dose mit geröstetem Kaffee, aufgebracht, so ist darauf zu achten, daß zuvor eine relativ kleine Öffnung in dem Verpackungsbehälter erzeugt wird und sich diese Öffnung innerhalb des Bereiches des Ventillochs 4 befindet. Tritt nun im Inneren des Verpackungsbehälters ein zu hoher Druck auf, so kann das entstandene Gas durch das Ventilloch 4 und den Zwischenraum zwischen dem Basisteil 1 und der vom Basisteil 1 getrennten Membrane 2 entweichen. Spätestens bei Druckausgleich schließt die Membrane 2 von selbst auf dem Beasisteil 1 in anliegender Lage, so daß keine Luft in den Innenraum des Verpackungsbehälters gelangen kann.

Es ist ersichtlich, daß der Öffnungsdruck des Überdruckventils gemäß der Erfindung von einer Reihe von Faktoren abhängt. Insbesondere ist die Lage und Abmessung des Distanzhalters 3 von Bedeutung. Befindet sich nämlich die Rechteckstirnfläche 3a im Bereich der rechtsseitigen Begrenzung des Ventillochs 4 (Fig. 2), so ist ein verhältnismäßig hoher Öffnungsdruck zum Öffnen des Ventils erforderlich. Befindet sich hingegen die Begrenzungsfläche 3a mehr im Bereich der linksseitigen Begrenzung des Ventillochs 4 (Fig. 2), so ist ein relativ geringer Öffnungsdruck erforderlich. Weiterhin sind auch noch die Größe der Flächen der Klebeverbindung zwischen den einzelnen Teilen, dem Basisteil 1, der Membrane 2 und dem Distanzhalter 3, von Bedeutung. Selbstverständlich geht auch noch die Dicke des Distanzhalters 3 und seine Flexibilität mit ein. Lediglich als Beispiel sei genannt, daß der Basisteil 1 und der Distanzhalter 3 eine Dicke von 100 bis 200 µ haben können, wohingegen die Dicke der Membrane in der Größenordnung von 10 bis 100 µ liegt.

Die in den Figuren 3 bis 7 gezeigten Überdruckventile gemäß der Erfindung sind bei entsprechenden Teilen mit gleichen Bezugsziffern versehen.

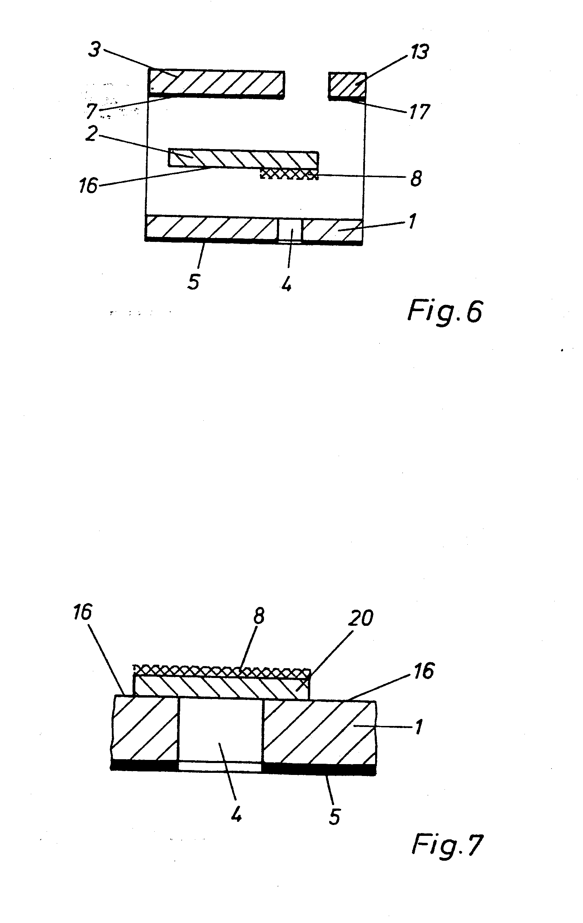

Zusätzlich zu der Membrane 2 kann bei den Ausführungsformen nach den Fig. 3 bis 6 ein Zwischenträger 20 (Fig. 7) vorgesehen sein, welcher auf dem Basisteil 1 aufruht. Im Zwischenträger 20 befindet sich eine kleine Öffnung, die auf das Ventilloch 4 ausgerichtet ist. Auf der nach oben zeigenden Fläche des Zwischenträgers 20 befindet sich die Haftwirkungsschicht 8 und auf dieser wiederum ruht die Membrane 2. Diese Art der Anbringung der Haftwirkungsmasse hat den Vorteil, daß die gesamte Oberfläche des Zwischenträgers 20 beschichtet werden kann, was einfacher ist, als die Oberfläche des Basisteils 1 nur mit einem Streifen der Haftwirkungsmasse, z.B. Silicon, zu versehen.

Der Zwischenträger 20 mit der kleinen Öffnung ist unterseitig mit Selbstklebemasse beschichtet.

Die über dem Loch 4 freie Klebfläche fängt eventuell aus der Packung geblasene Partikel ab und verhindert so deren Wanderung zwischen die Haftwirkungsschicht 8 und die Membrane 2, schließt also ein Undichtwerden durch unerwünschte Fremdkörper in dieser Zone aus.

Die Überdruckventile nach den Fig. 3 bis 6 zeigen Möglichkeiten der Anbringung der Haftwirkungsmassen 8, nämlich entweder am Basisteil 1 oder an der Membrane 2. Weiterhin wird die Anordnung eines zweiten Distanzhalters 13 gezeigt, der mittels einer Klebschicht 17 auf dem Basisteil 1 verklebt ist.

Mit 16 ist in den Fig. 3 bis 6 eine solche Fläche bezeichnet, die keinerlei Beschichtung aufweist und demzufolge bei Berührung mit einer Klebemasseschicht eines anderen Teiles zu einer innigen Verklebung der Teile führt.

Im Zusammenhang mit den vorangehend beschriebenen Ausführungsformen wird auf den Einfluß der Klebemasse verwiesen, der je nach den vorhandenen Klebkräften die Funktion des Ventils beeinflußt. Bei stärkeren Klebkräften (etwa $> 6$ N/cm) bzw. bei höherem Massepolster (etwa $> 30$ g/m$^2$) kann mit einem höheren Anpreßdruck gerechnet werden. Bei geringeren Klebkräften ($< 2$ N/cm) bzw. geringerem Massepolster (etwa $< 20$ g/m$^2$) ergibt sich für die Funktion des Ventils möglicherweise, daß dieses beim Ablassen des Überdrucks nur träge wieder schließt, so daß ein Luftausgleich zwischen dem Innenraum des Verpackungsbehälters und dem Außenraum möglich wird. Das vorangehend geschilderte Verhalten tritt auch zwischen weichen und harten Massen auf, auch hier stehen sich eine brauchbare Funktion bei hohem Anpreßdruck und trägem Schließen des Ventils gegenüber.

Als Klebmassen sind insbesondere einstellbare
Acrylat- oder Polyurethanmassen verwendbar.

Einen noch stärkeren Einfluß auf die Ventilfunktion
hat die Haftwirkungsmasse 8 bzw. die Releaseschicht,
deren Qualität und Quantität die Ventilfunktion beeinflußt. Bei einer sehr starken Releasewirkung ergibt
sich ein geringer Ansprechdruck, so daß eine relativ
rasche Entspannung auftritt, so daß ein Sauerstoffeinbruch in das Innere eines Verpackungsbehälters
nicht ausgeschlossen ist. Gewünscht wird eine gleichmäßige Releaseschicht mit einer mittleren Wirkung,
die einerseits eine schnelle Öffnung zuläßt und andererseits die Verklebung so lose hält, daß der Ansprechdruck im erforderlichen Bereich verbleibt.

Bei den geschilderten Ausführungsformen kann
der Basisteil 1 an Stelle des Ventilloches mit einem
perforierten Bereich ausgebildet sein. Dieser perforrierte Bereich ermöglicht den Gasaustritt bei Anwendung
des Überdruckventils an einem Verpackungsbehälter
und stellt auf der anderen Seite sicher, daß die Membrane 2 eine günstige Auflage hat. Mit anderen Worten
wird die Membrane auf dem perforierten Bereich 11
an vielen Stellen abgestützt, so daß damit ausgeschlossen ist, daß sich die Membrane unter dem Einfluß eines
Außendrucks beispielsweise in das Ventilloch hineinlegen kann und damit undicht wird, oder in unerwünschter
Weise auf der Packung selbst verklebt. Anstelle des
perforierten Bereiches kann auch eine gitterartige
oder sonstige poröse Struktur verwendet werden.

Für die Membrane kann auch ein Elastomer verwendet
werden, so daß vor dem Abheben der Membrane 2 vom
Basisteil 1 eine elastische Verformung der Membrane 2
stattfindet, was für bestimmte Anwendungsfälle die gewünschte Druckansprechcharakteristik des Überdruckventils ergibt.

0149695

Patentansprüche

1. Überdruckventil für einen Verpackungsbehälter, mit einem an der Außenwandung des Behälters anklebbaren Basisteil mit Ventilloch, einer Membrane, die den Basisteil bedeckt und auf ihm abhebbar aufliegt, und – falls wegen der Verpackungsform oder zwecks Regulierung des Ansprechdrucks erforderlich – mindestens einem an der Membrane und/oder an dem Basisteil befestigten Distanzhalter, dadurch gekennzeichnet, daß zwischen der Membrane (2) und dem Basisteil (1) ein selbstklebender Bereich (6, 16) und ein Haftwirkungsbereich (8) vorgesehen ist und daß der oder einer der Distanzhalter (3) sich teilweise über das Ventilloch (4) des Basisteils (1) erstreckt.

2. Überdruckventil nach Anspruch 1, dadurch gekennzeichnet, daß die Membrane (2) mit ihrer dem Basisteil (1) zugewandten Seite ganzflächig mit Klebemasse (6) beschichtet ist und der Basisteil (1) auf seiner der Membrane (2) zugewandten Seite um das Ventilloch (4) mit einer Haftwirkungsmasse (8) beschichtet ist (Fig. 3, Fig. 5).

3. Überdruckventil nach Anspruch 1, dadurch gekennzeichnet, daß die Membrane (2) mit ihrer dem Basisteil (1) zugewandten Seite im Bereich des Ventillochs (4) mit einer Haftwirkungsmasse (8) beschichtet ist und der Basisteil (1) auf seiner der Membrane (2) zugewandten Seite ganzflächig mit Klebemasse (6) beschichtet ist (Fig. 4, Fig. 6).

4. Überdruckventil nach einem der Ansprüche 1 bis 3, dadurch gekennzeichnet, daß sich zwischen der Membrane (2) und dem Basisteil (1) ein Zwischenträger (20) mit zum Ventilloch (4) ausgerichteter kleiner

Öffnung und einer Haftwirkungsmasse (8) auf der dem
Basisteil (1) abgewandten Seite und einer selbstklebenden Schicht auf der dem Basisteil (1) zugewandten
Seite befindet (Fig. 7).

5. Überdruckventil nach Anspruch 4, dadurch gekennzeichnet, daß die Haftwirkungsmasse (8) durch ganzflächige
Silikonisierung des Zwischenträgers (20) gebildet ist
(Fig. 7).

6. Überdruckventil nach einem der Ansprüche 1
bis 5, dadurch gekennzeichnet, daß anstelle eines
einzigen Ventillochs der Basisteil (1) mit einem luftdurchlässigen oder perforierten Bereich (4) ausgebildet
ist  (Figuren 1 bis 7).

7. Überdruckventil nach einem der Ansprüche 1 bis
6, dadurch gekennzeichnet, daß der Basisteil (1) aus
einer Kunststoffolie, insbesondere aus Polypropylen,
Polyester, Acrylpolymeren, Metall, und dergleichen,
oder einer Kunststoffolie mit eingebetteten oder eingeschlossenen Metallteilchen gebildet ist.

8. Überdruckventil nach einem der Ansprüche 1
bis 7, dadurch gekennzeichnet, daß die Membrane (2)
aus einer Kunststoffolie, insbesondere aus Polypropylen,
Polyester, Acrylpolymeren und dergleichen, oder aus
einer nach Art und Dicke mit dem gewählten Material
für den Basisteil (1) abgestimmten Metallfolie oder
Kunststoffolie mit eingebetteten oder eingeschlossenen
magnetischen Teilchen mit vorzugsweise einer Dicke
von ca. 20 bis ca. 100 µm gebildet ist.

9. Überdruckventil nach einem der Ansprüche 1 bis 8, dadurch gekennzeichnet, daß der Distanzhalter (3) aus einer Kunststoffolie, insbesondere aus Polypropylen, Polyester, Acrylpolymeren und dergleichen, mit einer Dicke von ca. 200 µm gebildet ist.

10. Überdruckventil nach einem der Ansprüche 1 bis 9, dadurch gekennzeichnet, daß anstelle der Beschichtung mit der Haftwirkungsmasse (8) bzw. der Releaseschicht für die Membrane (2) und den Basisteil (1) ferrodielektrische permanentmagnetische Kunststofffolien oder Folien mit Oberflächen verwendet werden, welche intermolekulare Kraftwirkungen aufeinander ausüben.

11. Überdruckventil nach einem der Ansprüche 1 bis 10, dadurch gekennzeichnet, daß der Basisteil (1) an seiner Unterseite eine klebstofffreie, vorzugsweise zentrale, Fläche aufweist.

Fig.1

Fig.2

Fig.3

Fig.4

Fig.5

Fig.6

Fig.7

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-A-2 848 835 (ROBERT BOSCH GmbH) <br> * Seite 4 * <br> --- | 1 | F 16 K 15/14 <br> B 65 D 75/52 |
| Y | DE-A-2 454 248 (FR. HESSER MACHINENFABRIK) <br> * Seite 7, Absatz 1 * <br> --- | 1 | |
| A | FR-A-2 321 647 (FR. WESSER MACHINENFABRIK) <br> * Patentanspruch 1 * <br> --- | 1 | |
| A | EP-A-0 023 703 (ROBERT BOSCH GmbH) <br> --- | | |
| A | DE-A-3 128 280 (ROBERT BOSCH GmbH) <br> --- | | RECHERCHIERTE SACHGEBIETE (Int. Cl. ³) |
| A | US-A-2 821 338 (M.R. METZGER) <br> ----- | | F 16 K 15/00 <br> B 65 D 75/00 <br> B 65 D 33/00 <br> B 65 D 81/00 <br> B 65 D 77/00 |

Der vorliegende Recherchenbericht wurde für alle Patentansprüche erstellt.

| Recherchenort | Abschlußdatum der Recherche | Prüfer |
|---|---|---|
| DEN HAAG | 19-08-1984 | DE SMET F.P. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82